# EUROPEAN PATENT SPECIFICATION

(11) **EP 0 669 421 B1**
(45) Date of publication and mention of the grant of the patent: **24.05.2000**
(21) Application number: 95301104.6
(22) Date of filing: 21.02.1995
(51) Int. Cl.: D07B 1/06

(54) **Steel cords for the reinforcement of rubber articles and pneumatic radial tires using the same**
Stahlseile zur Verstärkung elastomerer Erzeugnisse und solche Stahlseile aufweisende radiale Luftreifen
Câbles d'acier pour le renforcement d'articles en caoutchouc et bandages pneumatiques radiaux comportant de tels câbles

(30) Priority: 24.02.1994 JP 2644694
(43) Date of publication of application: 30.08.1995
(73) Proprietor: Bridgestone Corporation, Tokyo (JP)
(72) Inventor: Kuriya, Yoshinori, Kodaira City, Tokyo (JP)
(74) Representative: Whalley, Kevin

(56) References cited:
- EP-A- 0 268 121
- JP-A- 5 179 584

## Description

This invention relates to pneumatic radial tires.

Among pneumatic tires, tires for trucks, buses and light trucks commonly have a carcass ply comprised of steel cords having a two or three layer twisting structure or so-called multilayer twisting structure.

In general, bending deformation is caused in the steel cord as a reinforcing material during the running of the tire, and hence fretting wear is created in each filament constituting the steel cord to inevitably decrease the sectional area of the filament and lower the tenacity of the steel cord.

If the decrease of sectional area in a part of the filaments constituting the steel cord is considerable, such a filament is apt to undergo breakage under tension or repetitive bending. Once the filament is broken, tensile stress increases in the remaining filaments to promote fatigue breakage of the steel cord. Therefore, in order to improve the durability of the steel cord, it is effective to avoid premature breakage in a part of the filaments and also it is desirable that the lowering of tenacity in all filaments constituting the steel cord is same.

It is, therefore, an object of the invention to improve the durability of steel cord for the reinforcement of the carcass ply of pneumatic tires by arranging that any decrease of sectional area in the filaments constituting the cord based on fretting wear proceeds uniformly and gently, to equalize the decrease of tenacity in each of these filaments.

The present inventor has made various studies with respect to the steel cords of multilayer twisting structures used in heavy duty pneumatic tires, particularly steel cord of 3+9+15+1 structure causing decrease of tenacity during the running of the tire when such steel cords are used in the carcass ply of the tire. As a result, it has been found that the decrease of tenacity in the filament constituting the outermost layer of the cord is very large and the main cause of decreasing the tenacity is fretting wear between the filaments in the outermost layer and a wrap filament required for ensuring restraint of the filaments in this type of the cord and spirally wound around the outer periphery of the cord.

Now, the inventor has made further studies with respect to steel cords having no wrap filament for avoiding the fretting wear and found that the fretting wear through the wrap filament is naturally eliminated and the decrease of tenacity of the filament in the outermost layer can be suppressed. However, the restraint of the filaments in the cord is lowered due to the absence of the wrap filament and these filaments are scattered when the cord is extremely bent and hence a phenomenon of breaking a part of the filaments due to abnormal input is caused to largely lower the service life of the cord as compared with cord having a wrap filament. In order to prevent the lowering of the service life in the cord having no wrap filament due to the extreme bending input, therefore, it is required to ensure the restraint of the filaments constituting the cord.

If the restraint through the wrap filament is omitted, warp or torsion is caused in a treat used in, for example, a carcass ply of a tire, which considerably obstructs the assembling operability of a green tire. That is, the treat formed by coating a plurality of steel cords arranged in parallel to each other with rubber is cut into a given length and joined to each other for the formation of the carcass ply or belt layer. However, when using the steel cord having no restraint through the wrap filament, there is caused a phenomenon that the end portion of the treat after the cutting is warped upward or downward or only the corner of the cut end portion is warped to form torsion. As a result, the transportation of the treat is obstructed due to the presence of warp or torsion, or it is impossible to join the treats to each other, so that the assembling accuracy of the green tire lowers and the operability thereof lowers. Even in cord having no wrap filament, it is required to restrain the filaments constituting the cord.

Therefore, the present invention has been accomplished based on the above knowledge.

According to the invention, there is provided a pneumatic radial tire comprising a carcass of at least one carcass ply toroidally extending between a pair of bead portions, in which the carcass ply contains steel cords each comprising a core comprised of three steel filaments, a first sheath formed by twisting nine steel filaments around the core, and a second sheath formed by twisting fifteen steel filaments around the first sheath in a direction opposite to the twisting direction of the first sheath, in which a forming ratio F₁ of each filament in the first sheath defined by a ratio of amplitude H₁ of wave formed in the filament to ideal diameter D₁ of the first sheath and a forming ratio F₂ of each filament in the second sheath defined by a ratio of amplitude H₂ of wave formed in the filament to ideal diameter D₂ of the second sheath are within a range of 0.75-0.95, respectively, and satisfy F₁<F₂.

In the steel cord of the above structure, each filament constituting the cord has naturally a certain twisting angle, so that a sectional shape of the cord in a direction perpendicular to the longitudinal direction of the cord is ellipsoidal near to circular. When such a shape is considered as a circle, the ideal diameter of each sheath is calculated according to the following equations:${\text{D}}_{\text{1}} {\text{= (2√3/3+1)xr}}_{\text{c}} {\text{+2xr}}_{\text{1}}$${\text{D}}_{\text{2}} {\text{= (2√3/3+1)xr}}_{\text{c}} {\text{+2xr}}_{\text{1}} {\text{+2xr}}_{\text{2}}$ where
r_{c}: diameter of filament in core (mm)
r₁: diameter of filament in first sheath (mm)
r₂: diameter of filament in second sheath (mm).

The invention will be further described with reference to the accompanying drawings, wherein:
Fig. 1 is a diagrammatic sectional view of a steel cord having a 3+9+15 layer twisting structure;
Fig. 2 is a schematic view illustrating an amplitude of a wave-formed steel filament;
Fig. 3 is a section view of an embodiment of a pneumatic radial tire according to the invention; and
Fig. 4 is a schematic view illustrating a fretting depth of the steel filament.

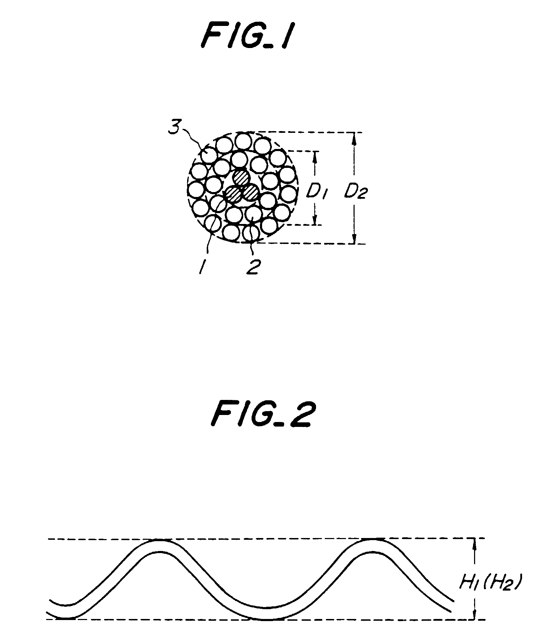

In Fig. 1 is sectionally shown a steel cord for the reinforcement of the carcass ply of a pneumatic radial tire according to the invention. Three steel filaments shown by oblique lines in Fig. 1 comprise a core 1 as a central base structure of the cord, and a first sheath 2 is formed by coaxially twisting nine steel filaments around the core 1 so as to arrange these filaments adjacent to each other, and a second sheath 3 is formed by twisting fifteen steel filaments around the first sheath in a direction opposite to the twisting direction of the first sheath 2.

Each of the filaments constituting the first sheath and second sheath is subjected to wave forming as shown in Fig. 2, whereby the operability in the formation of the second sheath 3 around the first sheath 2 is improved and also the restraint of the filaments in the cord after the twisting is ensured.

In the forming of the filaments for the first and second sheaths 2, 3, it is necessary that a forming ratio F₁ of each filament in the first sheath defined by a ratio of amplitude H₁ of wave formed in the filament to ideal diameter D₁ of the first sheath and a forming ratio F₂ of each filament in the second sheath defined by a ratio of amplitude H₂ of wave formed in the filament to ideal diameter D₂ of the second sheath are within a range of 0.75-0.95, respectively, and satisfy F₁<F₂.

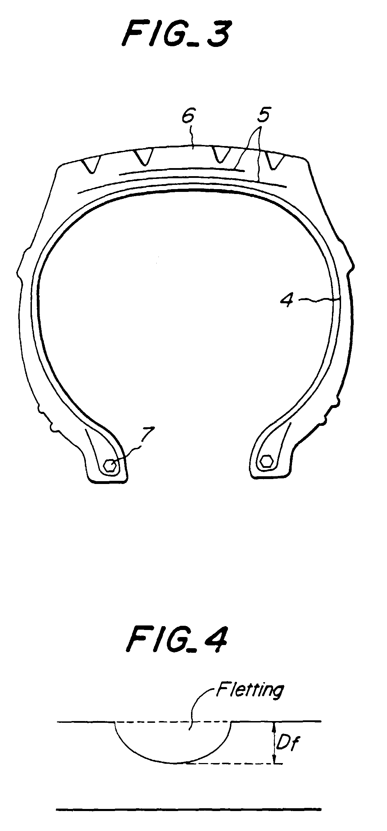

Furthermore, the steel cords are applicable to a carcass 4 in a pneumatic radial tire as shown, for example, in Fig. 3. In Fig. 3, numeral 5 denotes belt layers covering a crown portion of the carcass 4, numeral 6 denotes tread portion superimposed about the belt layers 5, and numeral 7 denotes bead core.

As previously mentioned, the lowering of filament tenacity in the steel cord of the layer twisting structure, particularly the lowering of filament tenacity in the outermost layer is due to fretting wear created between the wrap filament and the filament in the outermost layer, for example, during the running of the tire. This is because the contact area between the wrap filament and the filaments in the outermost layer is small and the contact pressure per unit area becomes large to create fretting wear.

In the case of rotating the tire, torsion is caused in the cords of the carcass ply at the ground contact region of the tire. When such a torsion is caused in a direction opposite to the twisting direction of the outermost layer, if the wrap filament is wound in a direction opposite to the twisting direction of the filaments constituting the outermost layer, torsion is caused in the wrap filament toward the same direction as the twisting direction of the filaments in the outermost layer and hence the wrap filament and the filaments of the outermost layer move in opposite directions to each other. Since the contact pressure per unit area is large, the decrease of sectional area in the filament in the outermost layer due to the fretting with the wrap filament is promoted by such an opposite movement to inevitably cause lowering of filament tenacity.

For this end, when the wrap filament is removed from the cord of the layer twisting structure, the lowering of the filament tenacity in the outermost layer is avoided. However, when the twisting direction of each sheath in the cord is the same, if a large bending input is applied as previously mentioned, the filaments of these sheaths are scattered and consequently a part of these filaments is broken due to the abnormal input and finally the service life of the cord can not be improved.

On the contrary, when steel cord having a 3+9+15 layer twisting structure is formed by removing the wrap filament, if the twisting direction of the first sheath is opposite to the twisting direction of the second sheath, the filaments of the second sheath restrain the filaments of the first sheath and develop the same restraining effect as in the wrap filament. Furthermore, the number of the filaments is large and the twisting pitch is long in the filaments of the second sheath bearing the restraint as compared with the wrap filament bearing the restraint, so that the contact pressure between the filaments of the second sheath becomes low and the lowering of filament tenacity due to the fretting wear becomes negligible.

Further, when the direction of torsion applied to the filaments of the second sheath is the same as the twisting direction of these filaments, no problem occurs. On the other hand, when the torsion is applied in a direction opposite to the twisting direction of the second sheath, torsion is caused in the first sheath in a direction opposite to the twisting direction of the second sheath to control the movement of disentangling the first sheath, which acts to restrain the second sheath. As a result, the first sheath and the second sheath exert a restraining force upon each other to maintain the restraint between the filaments in each sheath of the cord.

According to the invention, when the forming ratio F₁ of each filament in the first sheath and the forming ratio F₂ of each filament in the second sheath are within a range of 0.75-0.95, preferably 0.85-0.95, respectively, and satisfy F₁<F₂, the restraint between the filaments in the cord becomes more sure and rigid and hence the stability to torsion of the cord itself or the resistance to torsion or disentanglement is improved.

Also, the restraint in the cord is rationalized, so that it is effective to improve the operability in factory. This is because, when the restraint in the cord is not adequate as mentioned above, the cord is apt to cause torsion and hence warp or torsion is created in the treat formed by coating the cords with rubber to bring about an increase of the fraction defective and the lowering of productivity.

Incidentally, the cords of so-called rubber penetration structure in which rubber is penetrated into gap between filaments in outermost sheath layer as proposed in JP-A-5-179584 or the like tend to prolong the service life of the cord during the large bending input because the restraint through rubber is applied to the outermost sheath layer. However, the range of causing fretting wear is increased owing to the presence of the gaps between the filaments in the sheath for the formation of the rubber penetration structure as compared with a cord of compactly twisted structure, which is unfavourable from a viewpoint of cord durability and tends to lower the resistance to corrosion fatigue.

Moreover, the mutual tightening effect by making the twisting direction of the second sheath different from that of the first sheath may be observed even in the two-layer twisted cord. In the latter case, the difference in the number of filaments between the core and the sheath is large, so that the force of controlling the disentangling of the sheath is small and the effect is less.

In order to prevent the breakage of the filament in the cord, it is more preferable to reduce the surface strain. In general, the surface strain of the filament ε is approximated by ε = D/2R (wherein D is filament diameter, and R is radius of curvature in the bending of the cord). Therefore, in order to reduce the surface strain ε under a certain bending input R, it is preferable to make the filament diameter D as fine as possible.

That is, in order to prevent breakage of the filament against extreme bending input applied to the carcass ply of a heavy duty pneumatic radial tire, in the cord exhibiting the effect according to the invention, it is preferable that the filament diameter is less than 0.220 mm. On the other hand, the lower limit of the filament diameter is preferably 0.150 mm in view of the productivity and production cost. Furthermore, in order to make the filament diameter as fine as possible and ensure the required cord tenacity, it is preferable to use a so-called high-strength steel material in which the tensile strength of the filament per unit sectional area is not less than 330 kgf/mm².

The following examples are given in illustration of the invention and are not intended as limitations thereof.

A pneumatic radial tire for trucks and buses having a tire size of 1000R20 16PR and a tire structure as shown in Fig. 3 is manufactured by applying each of steel cords as shown in Tables 1 and 2 to a carcass ply of the tire at an end count of 22.0 cords/5 cm.

The retention of cord tenacity, percentage of filament breakage, fretting depth and operability in factory are measured with respect to the resulting tire to obtain results as shown in Tables 1 and 2.

The retention of cord tenacity is evaluated as follows: that is, the test tire inflated under an internal pressure of 8 kgf/cm² is run at a speed of 60 km/h under JIS 100% load over a distance of 300,000 km by conducting retreading every running distance of 100,000 km and thereafter a sample of the rubberized steel cord is taken out from the carcass ply of the test tire after the running and placed on an Instron tensile testing machine to measure the tensile strength of the sample. The retention of cord tenacity (%) is calculated by a ratio of the measured value to a value of tensile strength of the cord before assembling into the tire. The calculated value is represented by an index on the basis that the result of Comparative Example 1 is 100. The larger the index value, the better the retention of cord tenacity.

The percentage of filament breakage is represented by a percentage of the number of broken filaments in 10 cords taken out from the carcass ply after the test tire is run on a drum under an internal pressure of 1 kgf/cm² over a distance of 10,000 km to the total number of filaments in 10 cords. The smaller the numerical value, the better the resistance to filament breakage. The percentage of filament breakage is preferably not more than 10%.

The fretting depth is measured as follows. After the test tire is run on a drum over a distance of 100,000 km under the same conditions as in the retention of cord tenacity, two steel filaments in each of the first and second sheaths are taken out from the steel cord in the carcass ply of the tire and a quantity of filament diameter D_{f} reduced due to fretting wear as shown in Fig. 4 is measured for every filament within a region of 13 cm ± 2 cm from the widthwise center of the tread. A maximum value among the measured values is evaluated as the fretting depth. The smaller the numerical value, the better the resistance to fretting wear. The fretting depth is preferably not more than 20 µm.

In the operability in factory, the fraction defective and productivity of the treat containing steel cords at each production step from twisting step to the tire build-up step are evaluated by three stages, in which symbol ○ is no problem, symbol Δ a partial problem (e.g. it is required to remove the catching of the transporting treat) and symbol X a great problem (e.g. the operation is delayed due to the catching of the treat in a tire building machine or poor joints between the treats lowers the assembling accuracy of the green tire).

**Table 1**

| | Comparative Example 1 | Comparative Example 2 | Comparative Example 3 | Comparative Example 4 | Comparative Example 5 | Comparative Example 6 |
|---|---|---|---|---|---|---|
| Twisting structure | 3+9+1 | 3+9 | 3+9 | 3+9+15+1 | 3+9+15 | 3+9+13 |
| Filament diameter | 0.22 | 0.22 | 0.22 | 0.17 | 0.17 | 0.17 |
| Twisting direction | S/S/Z | S/S | S/Z | S/S/Z/S | S/S/S | S/S/Z |
| Twisting pitch (mm) | 6/12/3.5 | 6/12 | 6/12 | 5/10/15/3.5 | 5/10/15 | 5/10/15 |
| F₁ | 0.95 | 0.94 | 0.95 | 0.82 | 0.85 | 0.86 |
| F₂ | 0.94 | 0.94 | 0.95 | 0.63 | 0.91 | 0.88 |
| Retention of cord tenacity | 91 | 98 | 93 | 87 | 97 | 92 |
| Percentage of filament breakage (%) | 43 | 100 | 78 | 14 | 17 | 4 |
| Fretting depth (max value: µm) | 37 | 7 | 19 | 34 | 11 | 28 |
| Operability in factory | ○ | × | Δ | ○ | × | ○ |

**Table 2**

| | Comparative Example 7 | Comparative Example 8 | Acceptable Example 1 | Acceptable Example 2 | Acceptable Example 3 | Acceptable Example 4 |
|---|---|---|---|---|---|---|
| Twisting structure | 3+9+15 | 3+9+15 | 3+9+15 | 3+9+15 | 3+9+15 | 3+9+15 |
| Filament diameter | 0.17 | 0.17 | 0.17 | 0.17 | 0.155 | 0.155 |
| Twisting direction | S/S/Z | S/S/Z | S/S/Z | S/S/Z | S/S/Z | S/S/Z |
| Twisting pitch (mm) | 5/10/15 | 5/10/15 | 5/10/15 | 5/10/15 | 5/10/15 | 5/10/15 |
| F₁ | 0.85 | 0.70 | 0.87 | 0.76 | 0.79 | 0.93 |
| F₂ | 0.60 | 1.00 | 0.88 | 0.94 | 0.91 | 0.95 |
| Retention of cord tenacity | 94 | 93 | 95 | 94 | 95 | 96 |
| Percentage of filament breakage (%) | 6 | 8 | 5 | 6 | 4 | 4 |
| Fretting depth (max value: µm) | 17 | 21 | 16 | 17 | 15 | 14 |
| Operability in factory | Δ | Δ | ○ | ○ | ○ | ○ |

As seen from Tables 1 and 2, Comparative Examples 1, 4 and 6 have good operability in factory owing to the restraint through the wrap filament, but have large fretting depth. In Comparative Examples 2 and 5, the fretting depth is small, but the operability in factory is poor. In Comparative Example 3, the effect is less though the twisting directions of the core and the sheath are opposite. In Comparative Examples 7 and 8, the forming ratio of the filament in the sheath is outside the range defined in the invention, so that the operability in factory is poor.

As mentioned above, in the steel cord used in the carcass ply of a pneumatic radial tire according to the invention, the fretting wear between the filament in the outermost sheath layer and the wrap filament is eliminated and the tenacity of the filament in the cord proceeds uniformly and gently to improve the service life of the cord. As a result, the durability of the pneumatic tire can be improved.

## Claims

1. A pneumatic radial tire comprising a carcass (4) of at least one carcass ply toroidally extending between a pair of bead portions (7), in which the carcass ply contains steel cords each comprising a core (1) comprised of three steel filaments, a first sheath (2) formed by twisting nine steel filaments around the core, and a second sheath (3) formed by twisting fifteen steel filaments around the first sheath in a direction opposite to the twisting direction of the first sheath, in which a forming ratio F₁ of each filament in the first sheath (2) defined by a ratio of amplitude H₁ of wave formed in the filament to ideal diameter D₁ of the first sheath and a forming ratio F₂ of each filament in the second sheath (3) defined by a ratio of amplitude H₂ of wave formed in the filament to ideal diameter D₂ of the second sheath are within a range of 0.75-0.95, respectively, and satisfy F₁<F₂.

2. A pneumatic radial tire as claimed in claim 1, characterized in that the forming ratio F₁ of each filament in the first sheath (2) and the forming ratio F₂ of each filament in the second sheath (3) are within a range of 0.85-0.95, respectively.

3. A pneumatic radial tire as claimed in claim 1 or 2, characterized in that each of the steel filaments has a diameter of not less than 0.150 mm but less than 0.220 mm and has a tensile strength of not less than 330 kgf/mm².

## Patentansprüche

1. Radialer Luftreifen, aufweisend eine Karkasse (4) aus mindestens einer Karkassenlage, die sich toroidförmig zwischen zwei Wulstbereichen (7) erstreckt, wobei die Karkassenlage Stahlcordfäden enthält, von denen jeder einen Kern (1) aufweist, der aus drei Stahlfilamenten besteht, einen ersten Mantel (2) aufweist, der durch Verdrillen von neun Stahlfilamenten um den Kern herum gebildet ist, und einen zweiten Mantel (3) aufweist, der durch Verdrillen von fünfzehn Stahlfilamenten um den ersten Mantel herum in einer zu der Verdrillrichtung des ersten Mantels entgegengesetzten Richtung gebildet ist, wobei das Formungsverhältnis F₁ jedes Filaments bei dem ersten Mantel (2), definiert durch das Verhältnis der Amplitude H₁ der in dem Filament gebildeten Welle zu dem idealen Durchmesser D₁ des ersten Mantels, und das Formungsverhältnis F₂ jedes Filaments bei dem zweiten Mantel (3), definiert durch das Verhältnis der Amplitude H₂ der in dem Filament gebildeten Welle zu dem idealen Durchmesser D2 des zweiten Mantels, innerhalb des Bereichs 0,75-0,95 liegen und die Bedingung F₁<F₂ erfüllen.

2. Radialer Luftreifen, wie in Anspruch 1 beansprucht, dadurch gekennzeichnet, daß das Formungsverhältnis F₁ jedes Filaments bei dem ersten Mantel (2), und das Formungsverhältnis F₂ jedes Filaments bei dem zweiten Mantel (3) innerhalb des Bereichs 0,85-0,95 liegen.

3. Radialer Luftreifen, wie in Anspruch 1 oder 2 beansprucht, dadurch gekennzeichnet, daß jedes der Stahlfilamente einen Durchmesser von nicht weniger als 0,150 mm, aber weniger als 0,220 mm hat, und eine Zugfestigkeit von nicht weniger als 330 kp/mm² hat.

## Revendications

1. Bandage pneumatique radial comprenant une carcasse (4) composée d'au moins d'une nappe de carcasse s'étendant toroïdalement entre une paire de talons (7), la nappe de carcasse contenant des câblés en acier comprenant chacun une âme (1), composée de trois filaments d'acier, une première gaine (2) formée par torsion de neuf filaments en acier autour de l'âme, et une deuxième gaine (3) formée par torsion de quinze filaments d'acier autour de la première gaine, dans une direction opposée à la direction de torsion de la première gaine, un rapport de formage F₁ de chaque filament dans la première gaine (2), défini par un rapport entre l'amplitude H₁ de l'onde formée dans le filament et le diamètre idéal D₁ de la première gaine, et un rapport de formage F₂ de chaque filament dans la deuxième gaine (3), défini par un rapport entre l'amplitude H₂ de l'onde formée dans le filament et le diamètre idéal D₂ de la deuxième gaine étant respectivement compris dans un intervalle allant de 0,75 à 0,95, satisfaisant à la relation F₁ < F₂.

2. Bandage pneumatique radial selon la revendication 1, caractérisé en ce que le rapport de formage F₁ de chaque filament dans la première gaine (2) et le rapport de formage F₂ de chaque filament dans la deuxième gaine (3) sont respectivement compris dans un intervalle allant de 0,85 à 0,95.

3. Bandage pneumatique radial selon les revendications 1 ou 2, caractérisé en ce que chacun des filaments en acier a un diamètre non inférieur à 0,150 mm, mais inférieur à 0,220 mm, et présente une résistance à la traction non inférieure à 330 kgf/mm².
